Europäisches Patentamt

European Patent Office

Office européen des brevets

(19)

(11) Numéro de publication : **0 081 398**
**B1**

(12) # FASCICULE DE BREVET EUROPÉEN

(45) Date de publication du fascicule du brevet :
07.08.85

(51) Int. Cl.⁴ : **B 62 D   5/04**

(21) Numéro de dépôt : 82401978.0

(22) Date de dépôt : 26.10.82

(54) **Dispositif perfectionné d'assistance de direction pour véhicule automobile.**

(30) Priorité : 03.12.81 FR 8122637

(43) Date de publication de la demande :
15.06.83 Bulletin 83/24

(45) Mention de la délivrance du brevet :
07.08.85 Bulletin 85/32

(84) Etats contractants désignés :
DE GB IT

(56) Documents cités :
FR-A- 2 251 189

(73) Titulaire : **ACIERS ET OUTILLAGE PEUGEOT Société dite:**
**F-25400 Audincourt (Doubs) (FR)**

(72) Inventeur : **RUDI, Alain**
**2 rue Collin Essert**
**F-90000 Belfort (FR)**

(74) Mandataire : **Bressand, Georges et al**
**c/o CABINET LAVOIX 2 Place d'Estienne d'Orves**
**F-75441 Paris Cedex 09 (FR)**

Jouve, 18, rue St-Denis, 75001 Paris, France

EP 0 081 398 B1

## Description

La présente invention est relative aux dispositifs d'assistance de direction pour véhicule automobile et en particulier à ceux dans lesquels l'énergie motrice nécessaire à l'assistance est fournie par un moteur électrique.

Dans le FR-A-2 442 476, on décrit un dispositif d'assistance de direction de ce type. Dans ce cas, le moteur électrique est branché en série sur une source d'alimentation par l'intermédiaire d'un inverseur marche-arrêt autorisant les deux sens de marche du moteur et commandé par un capteur sensible au couple exercé sur le volant, ledit inverseur réagissant à une première valeur prédéterminée de ce couple, tandis que lorsque celui-ci atteint une seconde valeur prédéterminée supérieure à la première, le moteur électrique est couplé à la colonne de direction pour fournir l'assistance.

Lorsque le véhicule roule sur des pavés, des revêtements ondulés ou circule en virage, les obstacles successifs exercent sur les roues des efforts latéraux périodiques qui se répercutent sur la direction et agissent, par exemple, par les biellettes et la crémaillère, sur le pignon de direction lié à la colonne de direction à travers la boîte d'assistance électromécanique du type décrit ci-dessus.

Ces perturbations font réagir le détecteur de couple qui ferme alors les contacts de l'inverseur d'une façon périodique.

La période des oscillations peut être de 5 à quelques dizaines de Herts, 20 Hz par exemple sur un véhicule donné.

Lorsque les contacts se ferment périodiquement, ils alimentent le moteur électrique toujours en phase démarrage (dans un sens ou l'autre) donc à de fortes intensités correspondant aux pointes d'intensité de démarrage classiques sur ce type de moteurs.

Ceci oblige à concevoir des contacts excessivement robustes et durables donc à augmenter de façon notable le prix de revient de ces organes.

A cette première difficulté se superpose la mauvaise tenue du couple balai-collecteur du moteur électrique qui, soumis sans déplacement en rotation ou presque à de fortes intensités, sera rapidement usé avec un risque de destruction par cratérisation due aux étincelles du collecteur.

A ce régime oscillatoire, il est pratiquement impossible de concevoir un couple balai-collecteur bon marché résistant à ces conditions, si bien qu'on peut être amené à prévoir une accessibilité aux balais pour échange périodique, ce qui accroît le coût général du moteur électrique et de l'entretien du véhicule. De plus, ceci ne résoud pas le problème de l'état de surface du collecteur. Il est donc pratiquement impossible de créer un dispositif d'assistance avec un moteur électrique dont le collecteur aura une durée de vie aussi longue que celle du véhicule.

L'invention a donc pour but de créer un dispositif d'assistance de direction à moteur électrique d'assistance qui soit dépourvu des inconvénients précités et qui conduise à supprimer l'usure prématurée de ce moteur électrique.

L'invention a pour objet un dispositif d'assistance de direction comportant un accouplement mécanique destiné à être interposé entre la colonne de direction et le volant, un détecteur du couple exercé sur le volant et un moteur électrique d'assistance qui peut être branché en série sur une source d'alimentation par l'intermédiaire d'un inverseur marche-arrêt autorisant sélectivement les deux sens de marche du moteur, ledit inverseur étant commandé par ledit détecteur lorsque ledit couple dépasse une première valeur prédéterminée et ledit accouplement provoquant le couplage du moteur à la colonne de direction lorsque ledit couple excède une seconde valeur prédéterminée, caractérisé en ce qu'il comporte un circuit d'inhibition de l'action dudit inverseur marche-arrêt et en ce que ce circuit d'inhibition est raccordé à un circuit discriminateur de fréquence monté de manière à détecter la fréquence à laquelle ledit inverseur est actionné pour inhiber celui-ci lorsque cette fréquence d'actionnement dépasse une limite supérieure prédéterminée.

Grâce à ces caractéristiques, le moteur électrique d'assistance de direction ne peut agir qu'en réponse aux signaux de commande lents qui proviennent du conducteur du véhicule, toute action induite de l'extérieur sur la direction à travers les roues et provenant par exemple du revêtement routier, étant automatiquement rendue inopérante.

Suivant une autre caractéristique de l'invention, ledit circuit discriminateur comporte d'une part, un filtre passe-bas dont l'entrée est branchée en dérivation sur le circuit de l'inverseur et d'autre part, un circuit à seuil, raccordé à la sortie du filtre pour ne fournir un signal de commande audit circuit inhibiteur, que lorsque l'amplitude du signal de sortie dudit filtre passe-bas dépasse une limite supérieure prédéterminée.

De préférence, le filtre passe-bas comporte au moins une cellule RC associée à un circuit de décharge du composant capacitif de cette cellule.

Le filtre passe-bas peut comprendre une seconde cellule RC raccordée à la première cellule et transmettant le signal de sortie filtré audit circuit à seuil.

Le circuit d'inhibition comporte de préférence un composant semi-conducteur dont l'électrode de commande est raccordée au circuit à seuil et dont le circuit principal est branché en série avec les contacts fixes dudit inverseur en étant bloqué lorsque ladite limite de fréquence est détectée par le circuit discriminateur.

L'invention est exposée ci-après plus en détail à l'aide de dessins représentant seulement un mode d'exécution, sur lesquels :

la Figure 1 représente un schéma de la partie électrique d'un dispositif d'assistance de direction pour véhicule automobile suivant l'invention ;

la Figure 2 est un diagramme montrant en fonction du temps, l'allure de deux tensions apparaissant à deux points du circuit représenté sur la Fig. 1.

Les figures ne représentent que les parties essentielles pour la compréhension de l'invention et on a notamment omis de représenter la partie mécanique du dispositif d'assistance de direction au sujet duquel on peut se reporter au FR. 2 442 476 cité ci-dessus pour une description complète d'un exemple de réalisation d'un mécanisme utilisable avec les caractéristiques de l'invention.

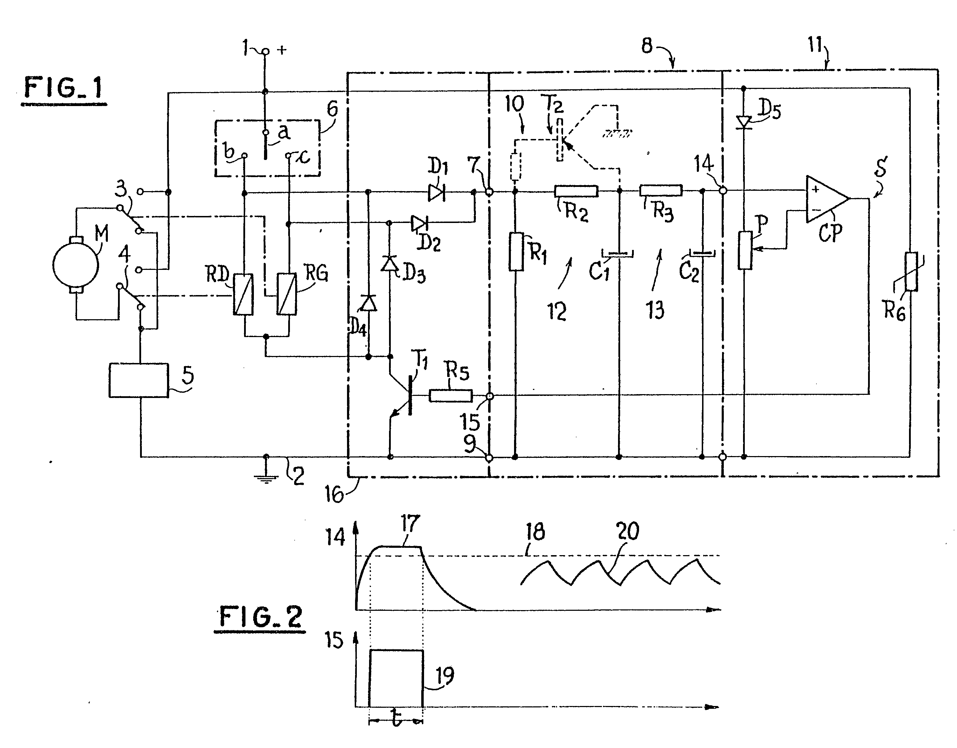

La Fig. 1 représente un mode de réalisation préféré de l'invention et le schéma montre notamment un moteur M pouvant être embrayé sur la colonne de direction (non représentée) par un mécanisme réagissant en fonction du couple qui est appliqué au volant (également non représenté) à partir d'une certaine valeur de ce couple. Le moteur est raccordé dans un circuit série connecté à la borne positive 1 de la batterie du véhicule et une ligne de masse 2 par l'intermédiaire de deux inverseurs 3 et 4 qui peuvent sélectivement appliquer la tension d'alimentation aux bornes du moteur M, l'inverseur 3 étant par exemple affecté à la marche du moteur lorsque le volant est tourné vers la gauche et l'inverseur 4 correspondant au cas contraire.

On notera en outre que le circuit série du moteur comprend un dispositif 5 de limitation du courant circulant dans le moteur, ce dispositif agissant lorsque la direction est bloquée sur un obstacle opposé aux roues, ou que la direction se trouve en fin de course dans l'un ou l'autre sens. On trouvera une description complète de ce dispositif dans la demande de brevet français déposée le 19 octobre 1981 au nom de la Demanderesse, et publiée le 22 avril 1983 sous le n° 2 514 711, cette demande ayant pour titre « Dispositif d'assistance de direction pour véhicule automobile ».

Les inverseurs 3 et 4 sont commandés respectivement par des bobines de relais RG et RD dont le circuit d'alimentation est le suivant.

La borne 1 d'alimentation positive du circuit est raccordée au contact mobile a d'un inverseur 6 à deux positions correspondant à deux contacts fixes b et c respectivement, ceux-ci étant reliés chacun à une des bobines de commande RD, RG. Les autres extrémités de ces bobines sont reliées ensemble au collecteur d'un transistor T1 dont l'émetteur est relié à la ligne de masse 2.

Les contacts b et c de l'inverseur 6 sont également connectés respectivement à deux paires de diodes D1, D2 et D3, D4, les premières étant branchées dans le sens direct vu du contact fixe b et les deux autres dans le sens opposé. Les cathodes des diodes D1 et D2, sont reliées ensemble à une borne d'entrée 7 d'un discriminateur de fréquence 8 qui est raccordé par son autre borne d'entrée 9 à la ligne de masse 2.

Le discriminateur de fréquence 8 comporte un filtre passe-bas 10 et un circuit à seuil 11.

Le circuit de filtrage passe-bas 10 comporte une première cellule de filtrage 12 comprenant une résistance R1 en parallèle sur les bornes 7 et 9, une seconde résistance R2 connectée à la jonction de la borne 7 et de la résistance R1 et un condensateur C1 qui est relié entre l'autre extrémité à la résistance R2 et la borne 9. La résistance R2 et le condensateur C1 forment ensemble un circuit RC ayant une constante de temps prédéterminée. La résistance R1 constitue une résistance de décharge du condensateur C1.

Le filtre passe-bas 10 comporte également une deuxième cellule de filtrage 13 formée d'une résistance R3 et d'un condensateur C2 montés en série sur les bornes du condensateur C1 de la première cellule de filtrage 12. La jonction entre la résistance R3 et le condensateur C2 constitue une borne de sortie 14 du filtre passe-bas 10. Les deux composants en question forment un circuit RC d'une constante de temps prédéterminée égale à la constante de temps de la première cellule de filtrage 12, ou différente de celle-ci.

La borne 14 est raccordée à l'entrée positive d'un amplificateur opérationnel CP dont l'entrée négative est connectée au curseur d'un potentiomètre P connecté entre la borne 1 et la borne 9 par l'intermédiaire d'une diode D5 qui a pour rôle de protéger le circuit contre les mauvais branchements. La sortie de l'amplificateur CP est reliée à la sortie 15 du circuit discriminateur de fréquence 8 en étant branchée ainsi par une résistance R5 à la base du transistor T1. Ce dernier fait partie d'un circuit d'inhibition 16 empêchant le moteur M d'être alimenté dans des conditions qui seront expliquées ci-après.

A titre de variante, et pour assurer un temps de décharge très bref du condensateur C1, le circuit peut comprendre un second transistor T2 dont la base est reliée à la jonction entre les résistances R1 et R2, dont le collecteur est connecté à la masse et dont l'émetteur se trouve branché à la jonction entre les résistances R2 et R3 et le condensateur C1.

Enfin, il est prévu une varistance R6 qui protège l'ensemble du circuit contre les surtensions et qui dévie à la masse, toute énergie fournie à une tension supérieure à une tension prédéterminée qui peut être de 18 volts, par exemple.

Le fonctionnement de ce circuit est le suivant.

Les diodes D1 à D4 sont des composants antiretour et reproduisent les tensions qui règnent sélectivement au contact fixe B et C de l'inverseur 6.

En admettant pour le moment que le transducteur T1 est conducteur, ce qui correspond à un fonctionnement normal du dispositif d'assistance de direction, les bobines de relais RD et RG sont sélectivement excitées lorsque le contact mobile a se trouve placé sur l'un ou l'autre des contacts fixes B et C suivant que le conducteur tourne le volant à gauche ou à droite. Dans ces conditions, le moteur M est excité pour tourner dans l'un ou l'autre sens et fournir ainsi un couple d'assistance à la colonne de direction. Dès que le conducteur cesse d'exercer un couple sur le volant, le contact a revient à sa position neutre et le moteur est désexcité. Il est à noter, que celui-ci est également protégé contre les surintensités pouvant se produire si le conducteur bloque la direction sur ces butées d'extrémité ou si les roues sont bloquées sur un obstacle, tel que la bordure d'un trottoir par exemple.

La borne 7 reçoit la tension positive de la borne 1 quel que soit le sens dans lequel le contact a est déplacé. Il en résulte qu'au cours du fonctionnement normal, c'est-à-dire lorsque l'excitation des bobines RD et RG se fait à basse fréquence, le signal de sortie du filtre passe-bas 10 est très voisin du signal produit sur les contacts b et c de l'inverseur 6. Pour un cycle d'assistance donnée, la borne 14 fait ainsi apparaître une tension dont la forme peut être celle représentée en 17 sur le graphique supérieur de la Fig. 2.

L'amplificateur opérationnel CP qui est branché en comparateur, compare la tension de la borne 14 à la tension de référence qui lui est appliquée par le curseur du potentiomètre P. Cette tension de référence est représentée par la ligne en pointillés 18 du graphique supérieur de la Fig. 2. Si la tension apparaissant à la borne 14 est supérieure au seuil ainsi établi, le comparateur ou amplificateur opérationnel CP fournit un signal de sortie de la forme 19 du second graphique de la Fig. 2, signal qui est appliqué à la base du transistor T1 le rendant conducteur. Ainsi, pendant toute la période où le contact a se trouve sur l'un ou l'autre des contacts b et c (temps t) sur la Fig. 2, le transistor T1 autorise la circulation d'un courant dans la bobine RD ou RG correspondante et ainsi l'excitation du moteur M. Bien entendu, le cycle représenté par la partie 17 du graphique de la Fig. 2 peut se répéter en fonction de l'action, qu'a le conducteur sur le volant de son véhicule.

Par contre, si en raison de l'état du revêtement de la route ou si dans un virage, les roues exercent sur la direction un certain couple qui survient à une fréquence supérieure à une valeur prédéterminée, le filtre passe-bas 10 fait passer un signal à sa borne de sortie 14 qui est de la forme 20 représentée dans le graphique supérieur de la Fig. 2. Compte tenu des caractéristiques des deux cellules de filtrage 12 et 13, la tension ainsi engendrée ne parvient pas à devenir supérieure à la tension de référence appliquée par le potentiomètre P à l'entrée négative du comparateur CP. Il en résulte donc que ce comparateur ne fournit pas de signal de sortie, le transistor T1 reste bloqué et même si le contact a ferme le circuit des bobines RD et RG à la fréquence supérieure, ces bobines ne peuvent être excitées et le moteur reste donc dépourvu d'alimentation.

On voit que le condensateur C1 de la première cellule de filtrage 12 peut être déchargé à travers les résistances R2 et R1 en l'absence d'un signal sur les contacts b et c de l'inverseur. Cette décharge peut être rendue plus rapide grâce à un composant à résistance interne très faible constitué par le transistor T2, par exemple.

Le potentiomètre P permet d'adapter le réglage de la fréquence de coupure du circuit discriminateur en fonction des fréquences de résonance des directions des différents modèles de véhicule pouvant être équipés du dispositif d'assistance de direction suivant l'invention. En effet, la Fig. 2 montre que si l'on fait varier le seuil 18, on peut faire en sorte que pour une amplitude plus ou moins grande de la tension appliquée à la borne 7, le comparateur fournit ou ne fournit pas un signal de sortie au transistor T1. Bien entendu, la fréquence de réponse du discriminateur 8 peut être également déterminée par le choix des constantes de temps des cellules 12 et 13. En pratique, il s'est avéré que cette fréquence de coupure est avantageusement fixée à 20 Hertz.

## Revendications

1. Dispositif d'assistance de direction comportant un accouplement mécanique destiné à être interposé entre la colonne de direction et le volant, un détecteur du couple exercé sur le volant et un moteur électrique d'assistance (M) qui peut être branché en série sur une source d'alimentation (1,2) par l'intermédiaire d'un inverseur marche-arrêt (6) autorisant sélectivement les deux sens de marche du moteur, ledit inverseur (6) étant commandé par ledit détecteur lorsque ledit couple dépasse une première valeur prédéterminée et ledit accouplement provoquant le couplage du moteur (M) à la colonne de direction lorsque ledit couple excède une seconde valeur prédéterminée, caractérisé en ce qu'il comporte un circuit d'inhibition (R5, T1) de l'action dudit inverseur marche-arrêt (6) et en ce que ce circuit d'inhibition est raccordé à un circuit discriminateur de fréquence (8) monté de manière à détecter la fréquence à laquelle ledit inverseur (6) est actionné pour inhiber celui-ci lorsque cette fréquence d'actionnement dépasse une limite supérieure prédéterminée.

2. Dispositif suivant la revendication 1, caractérisé en ce que ledit circuit discriminateur (8) comporte d'une part, un filtre passe-bas (10) dont l'entrée est branchée en dérivation sur le circuit de l'inverseur (6) et d'autre part, un circuit à seuil (11) raccordé à la sortie du filtre (10) pour ne fournir un signal de commande audit circuit inhibiteur (R5, T1) que lorsque l'amplitude du signal de sortie dudit filtre passe-bas (10) dépasse une limite supérieure prédéterminée.

3. Dispositif suivant la revendication 2, caractérisé en ce que le filtre passe-bas comporte au moins une cellule RC (12) associée à un circuit de décharge (R1 ; T2) du composant capacitif (C1) de cette cellule (12).

4. Dispositif suivant la revendication 3, le filtre passe-bas (10) comporte une seconde cellule RC (13) raccordée à la première cellule et transmettant le signal de sortie filtré audit circuit à seuil (11).

5. Dispositif suivant l'une quelconque des revendications 2 à 4, caractérisé en ce que ledit circuit à seuil (11) comprend un comparateur (CP) dont l'une des bornes d'entrée est connectée à la sortie du filtre passe-bas (10) et dont l'autre entrée est reliée à une source de tension de référence (P), sa sortie étant branchée au circuit inhibition (R5, T1).

6. Dispositif suivant l'une quelconque des revendications 2 à 5, caractérisé en ce que le circuit d'inhibition (R5, T1) comporte un composant semi-conducteur (T1) dont l'électrode de commande est raccordée au circuit à seuil (11) et dont le circuit principal·est branché en série avec les contacts fixes (b, c) dudit inverseur (6) en étant bloqué lorsque ladite limite de fréquence est détecté par le circuit discriminateur (8).

7. Dispositif suivant l'une quelconque des revendications 3 à 6, caractérisé en ce que le circuit de décharge du composant capacitif (C1) d'au moins une cellule (12) du filtre passe-bas (10) comporte un transistor (T2).

## Claims

1. A steering assisting device comprising a mechanical coupling for interposing between the steering column and the steering wheel, a detector of the torque exerted on the steering wheel and an assisting electric motor (M) which can be connected in series to a supply (1, 2) through a start-stop reversing switch (6) selectively, allowing both directions of operation of the motor, said reversing switch (6) being actualed by said detector when said torque exceeds a first predetermined value and said coupling the motor (M) to the steering column when said torque exceeds a second predetermined value, characterised in that it comprises a circuit (R5, T1) for inhibiting the action of said start-stop reversing switch (6). and this inhibition circuit is connected to a frequency discriminating circuit (8) which is connected in such manner as to detect the frequency at which said reversing switch (6) is actuated so as to inhibit the latter when this actuating frequency exceeds a predetermined upper limit.

2. A device according to claim 1, characterised in that said discriminating circuit (8) comprises, on one hand, a low-pass filter (10) whose input is branch-connected to the circuit of the reversing switch (6) and, on the other hand, a threshold circuit (11) connected to the output of the filter (10) so as to deliver a signal for actuating said inhibiting circuit (R5, T1) only when the amplitude of the output signal of said low-pass filter (10) exceeds a predetermined upper limit.

3. A device according to claim 2, characterised in that the low-pass filter comprises at least an RC cell (12) associated with a discharge circuit (R1 ; T2) of the capacitive component (C1) of this cell (12).

4. A device according to claim 3, characterised in that the low-pass filter (10) comprises a second RC cell (13) connected to the first cell and transmitting the filtered output signal to said threshold circuit (11).

5. A device according to any one of the claims 2 to 4, characterised in that said threshold circuit (11) comprises a comparator (CP) of which one of the input terminals is connected to the output of the low-pass filter (10) and the other input is connected to a reference voltage source (P), its output being connected to the inhibiting circuit (R5, T1).

6. A device according to any one of the claims 2 to 5, characterised in that the inhibiting circuit (R5, T1) comprises a semi-conductor component (T1) whose control electrode is connected to the threshold circuit (11) and whose main circuit is connected in series with the fixed contacts (b, c) of said reversing switch (6), it being blocked thereby when said frequency limit is detected by the discriminating circuit (8).

7. A device according to any one of the claims 3 to 6, characterised in that the discharge circuit of the capacitive component (C1) of at least a cell (12) of the low-pass filter (10) comprises a transistor (T2).

## Patentansprüche

1. Servolenkeinrichtung mit einer zwischen der Lenksäule und dem Lenkrad geschalteten mechanischen Kupplung, einem Detektor zum Erfassen des auf das Lenkrad ausgeübten Moments und einem elektrischen Servomotor (M), der über einen Umkehr-Halte-Schalter (6) mit einer Speisequelle (1, 2) in Reihe geschaltet werden kann, wobei der Umkehr-Halte-Schalter selektiv die beiden Drehwicklungen des Motors bestimmt und von dem Detektor gesteuert wird, wenn das Moment einen ersten vorbestimmten Wert überschreitet und wobei die Kupplung das Ankuppeln des Motors (M) an die Lenksäule bewirkt, wenn das Moment einen zweiten vorbestimmten Wert überschreitet, gekennzeichnet durch eine Unerdrückungschaltung (R5, T1) der Bestätigung des Umkehr-Halte-Schalters (6) und dadurch, daß die Unterdrückungsschaltung mit einer Frequenzdiskriminator-Schaltung (8) verbunden ist, die zum Erfassen der Frequenz, bei der der Schalter (6) betätigt wird ausgelegt ist, um die Betätigung zu unterdrücken, wenn diese Betätigungsfrequenz einen vorbestimmten oberen Grenzwert überschreitet.

2. Einrichtung nach Anspruch 1, dadurch gekennzeichnet, daß die Diskriminatorschaltung (8) einerseits einen Tiefpaßfilter (10), dessen Eingang im Nebenschluß an die Umkehr-Halte-Schaltung (6) geschaltet ist und andererseits eine Schwelenwertschaltung (11) aufweist, die an dem Ausgang des Filters (10) angeschlossen ist, um nur dann ein Steuersignal an die Unterdrückungsschaltung (R5, T1) abzugeben, wenn die Amplitude des Ausgangssignals des Tiefpaßfilters (10) einen oberen vorbestimmten Grenzwert überschreitet.

3. Einrichtung nach Anspruch 2, dadurch gekennzeichnet, daß der Tiefpaßfilter mindestens ein RC-Glied (12) aufweist, das mit einer Entladungsschaltung (R1, T2) des kapazitiven Gliedes (C1) verbunden ist.

4. Einrichtung nach Anspruch 3, dadurch gekennzeichnet, daß der Tiefpaßfilter (10) ein zweites, mit dem ersten RC-Glied verbundenes RC-Glied (13) aufweist, das das gefilterte Ausgangsignal an die Schwellenwerschaltung (11) überträgt.

5. Einrichtung nach einem der Ansprüche 2 bis 4, dadurch gekennzeichnet, daß die Schwellenwertschaltung (11) einen Vergleicher (CP) aufweist, bei dem eine seiner Eingangsklemmen an den Ausgang des Tiefpaßfilters (10), der andere Eingang an eine Bezugsspannungsquelle (P) und sein Ausgang an die Unterdrückungsschaltung (R5, T1) geschaltet sind.

6. Einrichtung nach einem der Ansprüche 2 bis 5, dadurch gekennzeichnet, daß die Unterdrückungsschal ng (R5, T1) ein Halbleiterbauelement (T1) aufweist, dessen Steuerelektrode an die Schwellenwertschaltung (11) geschaltet ist und dessen Hauptschaltung in Reihe mit den festen Kontakten (b, c) der Umkehr-Halte-Schaltung (6) geschaltet ist, wobei diese blockiert ist, wenn die Unterdrückungsschaltung (8) den Frequenzgrenzwert erfaßt.

7. Einrichtung nach einem der Ansprüche 3 bis 6, dadurch gekennzeichnet, daß die Entladungsschaltung des kapazitiven Bauelements (C1) mindestens eines RC-Glieds (12) des Tiefpaßfilters einen Transistor (T2) aufweist.

**FIG.1**

**FIG.2**